# EUROPÄISCHE PATENTSCHRIFT

(11) **EP 0 544 077 B1**
(45) Veröffentlichungstag und Bekanntmachung des Hinweises auf die Patenterteilung: **22.11.1995**
(21) Anmeldenummer: 92116529.6
(22) Anmeldetag: 28.09.1992
(51) Int. Cl.: B23Q 7/04, B23D 41/06

(54) **Werkstück-Transporteinrichtung an einer Senkrechträummaschine**
Work-piece transport device on a vertical broaching machine
Dispositif de transport de pièces dans une machine à brocher verticale

(30) Priorität: 27.11.1991 DE 4138892
(43) Veröffentlichungstag der Anmeldung: 02.06.1993
(73) Patentinhaber: Oswald Forst Maschinenfabrik und Apparatebauanstalt GmbH & Co Kommanditgesellschaft, 42659 Solingen (DE)
(72) Erfinder: Holstein, Herbert, W-5650 Solingen 1 (DE); Kannemeier, Heinz, W-5650 Solingen 11 (DE)
(74) Vertreter: Rau, Manfred, Dr. Dipl.-Ing.

(56) Entgegenhaltungen:
- DE-A- 2 047 310
- DE-A- 2 401 400
- DE-A- 3 615 164
- DE-B- 2 400 235
- FR-A- 2 447 775
- SU-A- 677 881
- US-A- 4 678 393
- SOVIET ENGINEERING RESEARCH. (STANKI I INSTRUMENTY & VESTNIK MASHINOSTROENIA MASHINOSTROCNIE) Bd. 7, Nr. 8, August 1987, MELTON MOWBRAY (GB) Seiten 12 - 13 L.D. KORMANOVA ET AL 'A LOADING/UNLOADING ATTACHMENT FOR AN INDUSTRIAL ROBOT'

## Beschreibung

Die Erfindung betrifft eine Werkstück-Transporteinrichtung an einer Senkrechträummaschine nach dem Oberbegriff des Anspruches 1.

Bei Senkrechträummaschinen befindet sich der Maschinentisch mit der Werkstückaufnahme für die zu räumenden Werkstücke regelmäßig in erheblicher Höhe über der Basis des Gestells. Dies ist dadurch bedingt, daß die Räumwerkzeuge nach unten durch die in der Werkstückaufnahme befindlichen Werkstücke gezogen werden. Der hierfür erforderliche Raum muß im Gestell zwischen der Basis und dem Maschinentisch vorgesehen sein. Aus diesem Grunde befindet sich der Maschinentisch sehr oft zwei oder mehr Meter oberhalb der Basis des Gestells. Es wäre denkbar, das Gestell im Boden versenkt anzuordnen, um den Maschinentisch ebenerdig oder in geringer Höhe über dem Boden anordnen zu können. Dies ist von Ausnahmen abgesehen aus bautechnischen Gründen nicht möglich, da die Basis des Gestells direkt auf den Boden aufgesetzt wird. Dies hat zur Folge, daß die zu bearabeitenden Werkstücke, die mit einer nur geringfügig über dem Boden angeordneten Zuführeinrichtung zugeführt werden, mittels einer Hubeinrichtung auf die Höhe des Maschinentisches hochgefördert und nach dem Räumen von dort mittels einer Absenkeinrichtung wieder einer in Bodennähe befindlichen Abführeinrichtung zugeführt werden müssen. Hubeinrichtung und Absenkeinrichtung verlaufen vertikal und parallel zueinander, so daß in Höhe des Maschinentisches noch eine Querfördereinrichtung vorgesehen sein muß, mittels derer die Werkstücke aus der Übergabeposition der Hubeinrichtung in eine Zwischenposition vor der Räumstelle gebracht werden. Von hier werden die Werkstücke mittels einer Übergabeeinrichtung zur Räumstelle und nach dem Räumen wieder zu der Zwischenposition zurücktransportiert. Mittels einer weiteren Querfördereinrichtung werden sie dann in die Übergabeposition der Absenkeinrichtung gebracht. Eine solche Ausgestaltung ist aufwendig. Des weiteren sind die Transportzeiten durch die hohe Zahl der einzelnen Transportschritte sehr hoch.

Aus der DE-B1-24 00 235 ist eine Werkstück-Transporteinrichtung nach dem Oberbegriff des Anspruches 1 bekannt. Hierbei ist auf einer Seite der Räumposition eine durch einen Kettenförderer gebildete Hubvorrichtung vorgesehen, die Werkstücke in eine Übergabeposition anhebt, von wo sie mittels einer Übergabeeinrichtung in eine Räumposition verbracht werden. Aus der Räumposition werden die Werkstücke nach dem Räumen mittels der Übergabeeinrichtung zur hinter der Räumposition liegenden Übergabeposition gebracht, wo sie über eine Schrägrutsche wegrutschen.

Aus der DE-A1-24 01 400 ist es bekannt, Werkstücke von einem Förderband in einer Ebene auf eine Bearbeitungsstelle zu übergeben und wieder von dort auf das Förderband zurückzugeben. Hierzu sind zwei in der Horizontalen verfahrbare Greifer vorgesehen, die an einem gemeinsamen vertikal verfahrbaren Hubmast angebracht sind. Ein Greifkopf einer Zuführeinrichtung ergreift ein auf dem Förderband liegendes Werkstück. Anschließend wird er angehoben und fährt horizontal in Richtung zur Bearbeitungsstelle aus. Dort wird er durch Absenken des Hubmastes nach unten verfahren und das Werkstück abgelegt. Während des Ergreifens des Werkstückes auf dem Förderband ist der andere Greifer an der Bearbeitungsstelle und ergreift dort das bearbeitete Werkstück. Es wird gleichzeitig angehoben und der Greifer zurück zum Förderband verfahren, während der Greifer mit dem neuen Werkstück zur Bearbeitungsstelle hinverfahren wird. Die Bewegungen vom Förderband zur Bearbeitungsstelle und umgekehrt erfolgen in der Horizontalen. Diese bekannte Vorrichtung ist zum Einsatz an Räummaschinen mit oberhalb des Förderers befindlichen Räumpositionen nicht geeignet.

Der Erfindung liegt die Aufgabe zugrunde, eine Transportvorrichtung der gattungsgemäßen Art zu schaffen, die einfach aufgebaut ist und die eine Minimierung der Transportzeiten für die Werkstücke ermöglicht.

Diese Aufgabe wird erfindungsgemäß bei einer Transporteinrichtung der gattungsgemäßen Art durch die Merkmale im Kennzeichnungsteil des Anspruches 1 gelöst. Durch die erfindungsgemäßen Maßnahmen werden Querfördereinrichtungen überflüssig gemacht. Dadurch daß Hubeinrichtung und Absenkeinrichtung aufeinanderzu geneigt sind, wird ermöglicht, daß die Übergabepositionen von beiden zumindest in zwei Koordinatenrichtungen identisch sind, d.h. die Höhenlage beider Übergabepositionen ist identisch; weiterhin liegen sie bezogen auf die Übergaberichtung mindestens hintereinander, so daß aus diesen Übergabepositionen die Werkstücke aus der Hubeinrichtung in die Räumposition und nach dem Räumen aus der Räumposition in die Absenkeinrichtung verbracht werden können, und zwar durch eine im wesentlichen geradlinige Bewegung der Übergabeeinrichtung. Außer der Hubeinrichtung und der Absenkeinrichtung ist also nur noch eine Übergabeeinrichtung notwendig. Die Zahl der Transportwege wird damit auf ein Minimum reduziert. Der konstruktive Aufwand zur Erzeugung der Transportwege wird in gleicher Weise minimiert. Besonders vorteilhaft ist eine Ausgestaltung, bei der die Übergabepositionen identisch sind, also in drei Koordinaten übereinstimmen. Die Unteransprüche enthalten Ausgestaltungen der Erfindung.

Weitere Merkmale, Einzelheiten und Vorteile der Erfindung ergeben sich aus der nachfolgenden Beschreibung eines Ausführungsbeispieles anhand der Zeichnung. Es zeigt
- Fig. 1: eine Teilansicht einer Senkrecht-Innen-Räummaschine und eine Vorderansicht einer an dieser angebrachten Werkstück-Transporteinrichtung,
- Fig. 2: eine Seitenansicht der Räummaschine, wobei die Transporteinrichtung gemäß der Schnittlinie II-II in Fig. 1 geschnitten dargestellt ist,
- Fig. 3: eine Seitenansicht der Räummaschine, wobei die Transporteinrichtung gemäß der Schnittlinie III-III in Fig. 1 geschnitten dargestellt ist und
- Fig. 4: eine Draufsicht auf den Maschinentisch der Räummaschine und auf die Transporteinrichtung entsprechend dem Sichtpfeil IV in Fig. 1.

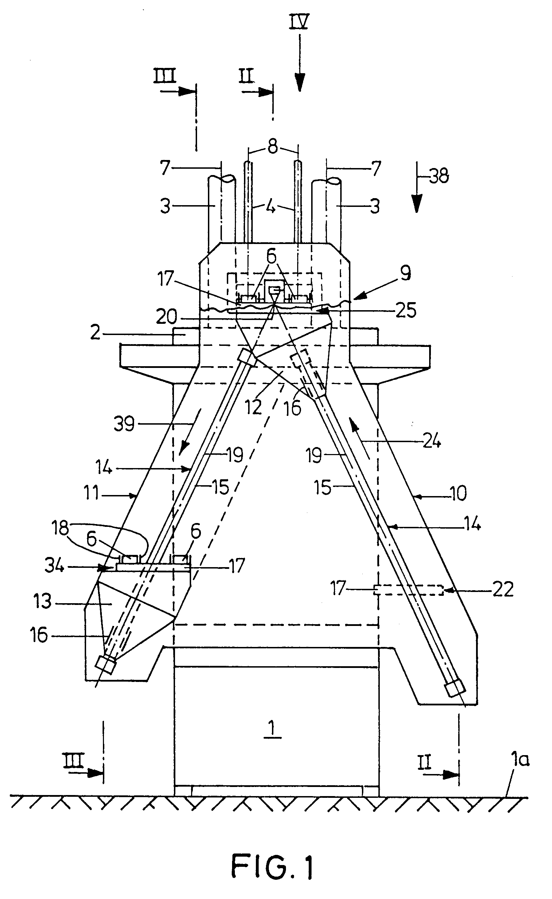

Die in der Zeichnung nur teilweise dargestellte Senkrecht-Räummaschine ist eine Senkrecht-Innen-Räummaschine. Sie weist in üblicher Weise ein Gestell 1 auf, auf dem ein Maschinentisch 2 abgestützt ist. Auf dem Gestell 1 stützen sich hydraulisch beaufschlagbare Arbeitszylinder 3 ab. Im Gestell 1 ist in üblicher Weise ein nicht dargestellter Räumschlitten angeordnet, mittels dessen jeweils ein Räumwerkzeug 4 durch die in oder auf einer Werkstückaufnahme 5 befindlichen Werkstücke 6 nach unten hindurchgezogen werden. Die Achsen 7 der Arbeitszylinder 3 und die Achsen 8 der Räumwerkzeuge 4 liegen in einer gemeinsamen Ebene. Parallel zu dieser Ebene ist an einer Seite des Gestells 1 eine Transporteinrichtung 9 zum Zuführen von zu bearbeitenden Werkstücken 6 und zum Abführen der bearbeiteten Werkstücke vorgesehen. Diese Transporteinrichtung 9 weist eine Hubeinrichtung 10 und eine Absenkeinrichtung 11 auf. Beide sind etwa gleich ausgebildet und weisen einen Hubschlitten 12 für zu bearbeitende Werkstücke 6 bzw. einen Absenkschlitten 13 für das Absenken bearbeiteter Werkstücke 6 auf. Der Hubschlitten 12 und der Absenkschlitten 13 werden jeweils durch einen Linearantrieb angetrieben, bei dem es sich im dargestellten und beschriebenen Ausführungsbeispiel um einen kolbenstangenlosen pneumatisch beaufschlagbaren Arbeitszylinder 15 handelt. Der Hubschlitten 12 und der Absenkschlitten 13 sind auf dem jeweiligen Arbeitszylinder 15 mit jeweils einer Führung 16 geführt, so daß der Hubschlitten 12 und der Absenkschlitten 13 bei einer Betätigung der jeweiligen Linearantriebe 14 parallel zu sich selber verschoben werden. Der Hubschlitten 12 und der Absenkschlitten 13 weisen jeweils eine verschwenkbare Auflage 17 mit seitlichen Positionier-Anschlägen 18 für die Werkstücke 6 auf. Die Achsen 19 der Linearantriebe 14 liegen in einer gemeinsamen Ebene, die zu der durch die Achsen 7, 8 aufgespannten Ebene parallel liegt, und schneiden sich vor der Werkstückaufnahme 5. Ihr Schnittpunkt 20 definiert die Stellung der jeweiligen Auflage 17 in der oberen Endlage des Hubschlittens 12 bzw. des Absenkschlittens 13, wie aus Fig. 1 hervorgeht. Das Gestell 1 ist auf dem Boden 1a abgestützt, wobei sich der Maschinentisch 2 mit der Werkstückaufnahme 5 mehrere Meter über dem Boden 1a befindet.

Der Hubeirrichtung 10 ist eine Zuführeinrichtung 21 vorgeordnet, die beispielsweise als geneigte Rutsche ausgebildet ist, und über die zu bearbeitende Werkstücke 6 zugeführt werden. Zur Aufnahme von Werkstücken 6 befindet sich der Hubschlitten 12 in seiner unteren, in Fig. 1 gestrichelt angedeuteten Zuführposition 22. Nach Öffnen einer Sperre 23 rutschen Werkstücke 6 auf die Auflage 17 des Hubschlittens 12, die durch Anlage auf einem Anschlag 23a schräg gestellt ist, zwischen die Positionier-Anschläge 18. Beim Hochfahren in Hubrichtung 24 wird der Hubschlitten 12 in eine obere Übergabeposition 25 gebracht, in der sich seine Auflage 17 mit den Werkstücken 6 vor der Werkstückaufnahme 5 befindet.

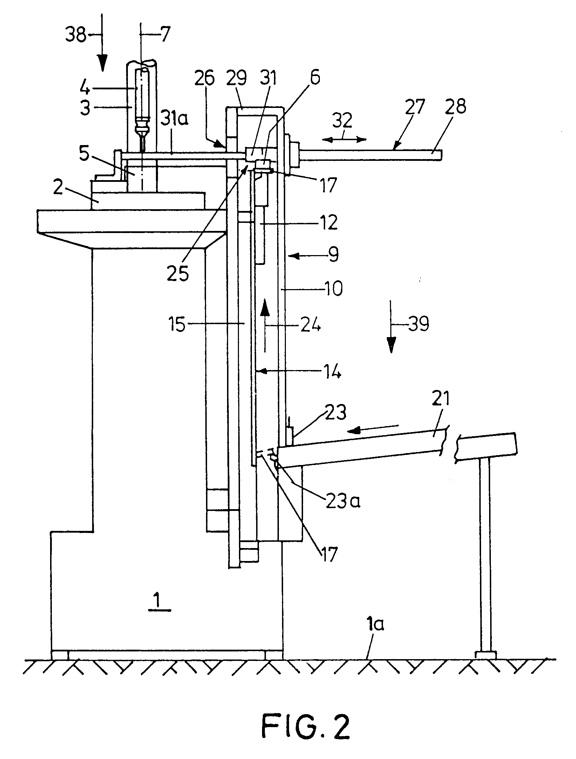

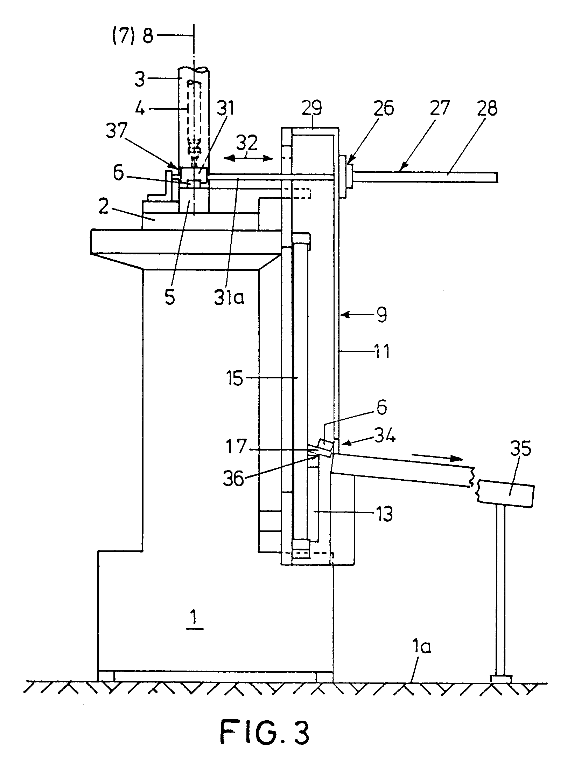

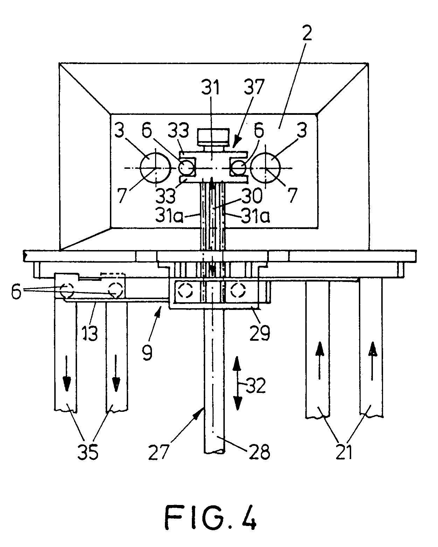

Zum Transport der Werkstücke 6 auf die Werkstückaufnahme 5 ist eine Übergabeeinrichtung 26 vorgesehen, die einen durch einen hydraulisch beaufschlagbaren Kolben-Zylinder-Antrieb 27 gebildeten Linearantrieb aufweist, dessen Zylinder 28 an einem Gehäuse 29 der Transporteinrichtung 9 befestigt ist. An seiner Kolbenstange 30 ist ein klauenartig ausgebildeter Mitnehmer 31 angebracht, der quer zur Übergaberichtung 32, d.h. quer zur Verschieberichtung des Antriebs 27 verlaufende Mitnahme-Anschläge 33 aufweist, die jeweils paarweise so angeordnet sind, daß zwischen ihnen ein Werkstück angeordnet sein kann, wie Fig. 4 entnehmbar ist. Der Mitnehmer 31 ist auf Führungsstangen 31a zwischen der in Fig. 2 dargestellten Übergabeposition und der in den Fig. 3 und 4 dargestellten Räumposition 37 auf der Werkstückaufnahme 5 verschiebbar.

Der Absenkschlitten 13 der Absenkeinrichtung 11 ist zwischen einer Übergabeposition 25, in der seine Auflage 17 eine mit der Position der Auflage 17 des Hubschlittens 12 in der Übergabeposition 25 identische Stellung einnimmt, und einer unteren Abführposition 34 verschiebbar. Dieser Abführposition 34 ist eine Abführeinrichtung 35, beispielsweise in Form einer geneigten Rutsche nachgeordnet. Auch hier ist ein Anschlag 36 vorgesehen, durch den die Auflage 17 beim Anfahren schräg gestellt wird, so daß die Werkstücke 6 von der Auflage 17 auf die Abführeinrichtung 35 herunterrutschen können.

Die Wirkungsweise ist wie folgt. Werkstücke 6 werden über die Zuführeinrichtung 21 dem in der unteren Zuführposition 22 befindlichen Hubschlitten 12 der Hubeinrichtung 10 zugeführt. Sie werden dort zwischen den Positionier-Anschlägen 18 positioniert. Dann fährt der Hubschlitten 12 durch entsprechende Beaufschlagung des Linearantriebes 14, also durch pneumatische Beaufschlagung des Arbeitszylinders 15 in Richtung 24 nach oben in die Übergabeposition 25, in der sich der Absenkschlitten 13 nicht befindet. Dagegen befindet sich der Mitnehmer 31 der Übergabeeinrichtung 26 in der Übergabeposition 25, so daß die auf der Auflage 17 des Hubschlittens 12 befindlichen Werkstücke 6 zwischen die einander paarweise zugeordneten Mitnahme-Anschläge 33 des Mitnehmers 31 geschoben werden. Anschließend wird der Antrieb 27 der Übergabeeinrichtung 26 beaufschlagt, so daß der Mitnehmer 31 mit den Werkstücken 6 aus der Übergabeposition 25 in die Räumposition 37 auf der Werkstückaufnahme 5 verschoben wird. Es erfolgt jetzt ein üblicher Räumvorgang, bei dem die Räumwerkzeuge 4 in Räumrichtung 38 nach unten durch die Werkstücke 6 gezogen werden, wobei ein vorgegebenes Profil geräumt wird. Während des Räumvorganges bleibt der Mitnehmer 31 in der Räumposition 37. Während dieses Vorganges wird der Hubschlitten 12 entgegen der Hubrichtung 24 wieder in die untere Zuführposition 22 verfahren, so daß wieder neue unbearbeitete Werkstücke 6 auf seine Auflage 17 aufgebracht werden können. Gleichzeitig wird durch entsprechende Beaufschlagung des Linearantriebs 14 der Absenkeirrichtung 11 der Absenkschlitten 13 aus seiner unteren Abführposition 34 in die Übergabeposition 25 nach oben verfahren. Nach Beendigung des Räumvorganges wird der Antrieb 27 wieder beaufschlagt, so daß der Mitnehmer 31 mit den bearbeiteten Werkstücken 6 aus der Räumposition 37 in die Übergabeposition 25 über der Auflage 17 des Absenkschlittens 13 gebracht wird. Letzterer wird dann in Absenkrichtung 39 nach unten in seine Abführposition 34 verfahren, wo die bearbeiteten Werkstücke 6 auf die Abführeinrichtung 35 gelangen und abtransportiert werden. Gleichzeitig wird bereits wieder der mit unbearbeiteten Werkstücken 6 besetzte Hubschlitten 12 aus der Zuführposition 22 in die Übergabeposition 25 verfahren, wo der Mitnehmer 31 noch wartet.

Die Ansteuerung der einzelnen Hub- bzw. Absenkbewegungen wird durch Endschalter ausgelöst, wobei sichergestellt sein muß, daß sich jeweils nur entweder der Hubschlitten 12 oder der Absenkschlitten 13 im oberen, der Übergabeposition 25 benachbarten Bereich befinden, da beide Schlitten in der Übergabeposition 25 sich an derselben Stelle befinden. Eine derartige Kollisionsvermeidung kann dadurch erreicht werden, daß der Hubschlitten 12 erst aus der Zuführposition 22 in die Übergabeposition 25 verfahren kann, wenn der Absenkschlitten 13 sich in der Abführposition 34 befindet, was umgekehrt in gleicher Weise gilt. Wenn die Taktzeiten verkürzt werden sollen, kann über zwischen der Übergabeposition 25 einerseits und der Zuführposition 22 bzw. der Abführposition 34 andererseits befindliche Zwischenpositionsschalter ein die entsprechende Bewegung freigebendes Signal gegeben werden.

Je nach Ausgestaltung der Werkstückaufnahme 5 und nach der Form der Werkstücke 6 kann der Mitnehmer 31 auch als Greifer ausgebildet sein, der das oder die Werkstücke 6 anhebt und in der Werkstückaufnahme 5 absetzt und aus dieser herausnimmt. Außerdem kann auch vorgesehen sein, daß ein entsprechender Greifer das oder die Werkstücke 6 in ihrer Lage zum Räumen ausrichtet.

Anstelle der beiden Linearantriebe 14 für den Hubschlitten 12 und den Absenkschlitten 13 kann auch ein Kettentrieb vorgesehen sein, der in Form einer endlosen Kette einerseits am Hubschlitten 12 und andererseits am Absenkschlitten 13 angebracht ist und der mittels eines reversierbaren Motors oder mittels eines hydraulisch beaufschlagbaren Arbeitszylinders hin- und hergehend antreibbar ist. In diesem Falle würden der Hubschlitten 12 und der Absenkschlitten 13 auf gesonderten Führungsstangen geführt.

Es ist weiterhin möglich, die Hubeinrichtung 10 und die Absenkeinrichtung 11 in Übergaberichtung 32 derart gegeneinander zu versetzen, daß der Hubschlitten 12 und der Absenkschlitten 13 gleichzeitig in ihrer Übergabeposition 25 sein können. Wenn hierbei die Übergabeposition 25 des Absenkschlittens 13 näher zur Räumposition 37 hin liegt, dann müssen der Hubschlitten 12 und der Absenkschlitten 13 sich in ihrer Übergabeposition 25 befinden, wenn mit dem Hubschlitten 12 Werkstücke 6 nach oben befördert sind, da in diesem Fall die Übergabeeinrichtung 26 die Werkstücke vom Hubschlitten 12 über den Absenkschlitten 13 zur Werkstückaufnahme 5 transportiert. Beim Rücktransport der Werkstücke aus der Räumposition 37 erfolgt dann nur ein Transport bis auf den Absenkschlitten 13. Bei einer solchen Ausgestaltung muß also der Mitnehmer 31 der Übergabeeinrichtung 26 über beiden Übergabepositionen 25 anhaltbar sein. Wenn die Übergabeposition 25 des Hubschlittens 12 näher an der Räumposition 37 ist als die Übergabeposition des Absenkschlittens 13, dann müssen beide Schlitten bei der Ausgabe des Werkstückes 6 aus der Räumposition 37 auf den Absenkschlitten 13 in der Übergabeposition sein.

## Patentansprüche

1. Werkstück-Transporteinrichtung an einer Senkrechträummaschine mit einer Hubeinrichtung (10) zum Transport mindestens eines Werkstückes (6) in Hubrichtung (24) aus einer unteren Zuführposition (22) in eine obere Übergabeposition (25), mit einer Übergabeeinrichtung (26) zur Ein- und Ausgabe des mindestens einen Werkstückes (6) in Übergaberichtung (32) in eine bzw. aus einer Räumposition (37), und mit einer Abserkeinrichtung (11) zum Absenken des mindestens einen Werkstückes (6) in Absenkrichtung (39) aus einer oberen Übergabeposition (25) in eine untere Abführposition (34), wobei die oberen Übergabepositionen (25) sich in einer gemeinsamen Höhenlage befinden und wobei die Übergabeeinrichtung (26) zwischen den Übergabepositionen (25) und der Räumposition (37) in Übergaberichtung (32) bewegbar ist, dadurch gekennzeichnet, daß die Hubeinrichtung (10) einen Hubschlitten (12) und die Absenkeinrichtung (11) einen Absenkschlitten (13) jeweils mit einer Auflage (17) für mindestens ein Werkstück aufweisen, daß die Hubeinrichtung (10) und die Absenkeinrichtung (11) derart zueinander geneigt angeordnet sind, daß ihre oberen Übergabepositionen (25) sich in einer gemeinsamen Höhenlage und auf derselben Seite der Räumposition (37) befinden.

2. Transporteinrichtung nach Anspruch 1, dadurch gekennzeichnet, daß die oberen Übergabepositionen (25) identisch sind.

3. Transporteinrichtung nach einem der Ansprüche 1 oder 2, dadurch gekennzeichnet, daß der Hubschlitten (12) und der Absenkschlitten (13) längs Geraden (Achsen 19) verschiebbar sind.

4. Transporteinrichtung nach Anspruch 3, dadurch gekennzeichnet, daß der Hubschlitten (12) und der Absenkschlitten (13) mittels mindestens eines Linearantriebes (14) antreibbar sind.

5. Transporteinrichtung nach Anspruch 4, dadurch gekennzeichnet, daß mindestens ein Linearantrieb (14) durch einen mit Druckmittel beaufschlagbaren kolbenstangerlosen Arbeitszylinder (15) gebildet ist.

6. Transporteinrichtung nach Anspruch 5, dadurch gekennzeichnet, daß der Hubschlitten (12) und/oder der Absenkschlitten (13) mittels einer Führung (16) auf dem Arbeitszylinder (15) verschiebbar geführt ist.

7. Transporteinrichtung nach Anspruch 1, dadurch gekennzeichnet, daß auf der jeweiligen Auflage (17) Positionier-Anschläge für das mindestens eine Werkstück (6) vorgesehen sind.

8. Transporteinrichtung nach Anspruch 2 und 3, dadurch gekennzeichnet, daß die Geraden (Achsen 19) sich in der gemeinsamen Übergabeposition (25) schneiden.

9. Transporteinrichtung nach einem der Ansprüche 1 bis 8, dadurch gekennzeichnet, daß die Übergabeeinrichtung (26) einen Mitnehmer (31) aufweist, der über der mindestens einen Übergabeposition (25) über der jeweiligen Auflage (17) des Hubschlittens (12) bzw. des Absenkschlittens (13) positionierbar ist.

10. Transporteinrichtung nach Anspruch 9, dadurch gekennzeichnet, daß der Mitnehmer (31) quer zur Bewegungsrichtung des Mitnehmers (31) paarweise angeordnete Mitnahme-Anschläge (33) aufweist, die zwischen sich ein Werkstück (6) aufnehmen.

11. Transporteinrichtung nach Anspruch 9, dadurch gekennzeichnet, daß der Mitnehmer als Greifer ausgebildet ist, der das mindestens eine Werkstück (6) anhebt und in der Werkstückaufnahme (5) absetzt und aus dieser herausnimmt.

12. Transporteinrichtung nach Anspruch 11, dadurch gekennzeichnet, daß der Greifer das mindestens eine Werkstück (6) in seiner Lage zum Räumen ausrichtet.

13. Transporteinrichtung nach einem der Ansprüche 1 oder 2, dadurch gekennzeichnet, daß der Hubschlitten (12) und der Absenkschlitten (13) miteinander gekoppelt sind und mittels lediglich eines reversierbaren Antriebs gegensinnig auf bzw. ab antreibbar sind.

## Claims

1. Workpiece transporting equipment on a vertical broaching machine, comprising a lifting device (10) for the transport of at least one workpiece (6) in the lifting direction (24) from a lower loading position (22) into an upper transfer position (25), a transfer device (26) for the supply and delivery of the at least one workpiece (6) in the transfer direction (32) into or from a broaching position (37), and a lowering device (11) for the lowering of the at least one workpiece (6) in the lowering direction (39) from an upper transfer position (25) into a lower discharge position (34), the upper transfer positions (25) being on a common level, and the transfer device (26) being movable between the transfer positions (25) and the broaching position (37) in the transfer direction (32), characterized in that the lifting device (10) comprises a lifting slide (12) and the lowering device (11) comprises a lowering slide (13), each having a support (17) for at least one workpiece, in that the lifting device (10) and the lowering device are tilted toward each other such that their upper transfer positions (25) are on a common level and on the same side of the broaching position (37).

2. Transporting equipment according to claim 1, characterized in that the upper transfer positions (25) are identical.

3. Transporting equipment according to one of claims 1 or 2, characterized in that the lifitng slide (12) and the lowering slide (13) are displaceable along straight lines (axes 19).

4. Transporting equipment according to claim 3, characterized in that the lifting slide (12) and the lowering slide (13) are drivable by at least one linear drive (14).

5. Transporting equipment according to claim 4, characterized in that at least one linear drive (14) is formed by a pressure-medium-actuated working cylinder (15) that has no piston rod.

6. Transporting equipment according to claim 5, characterized in that the lifting slide (12) and/or the lowering slide (13) are guided displaceably on the working cylinder (15) by a guide (16).

7. Transporting equipment according to claim 1, characterized in that positioning stops for the at least one workpiece (6) are provided on the respective support (17).

8. Transporting equipment according to claim 2 and 3, characterized in that the straight lines (axes 19) intersect in a common transfer position (25).

9. Transporting equipment according to one of claims 1 to 8, characterized in that the transfer device (26) has a driver (31) to be positioned above the at least one transfer position (25) above the respective support (17) of the lifting slide (12) or the lowering slide (13).

10. Transporting equipment according to claim 9, characterized in that the driver (31) has driving stops (33) disposed in pairs at right angles to the direction of motion of the driver (31) and receiving between them a workpiece (6).

11. Transporting equipment according to claim 9, characterized in that the driver is a grab, which lifts the at least one workpiece (6) and places it into, and removes it from, the receiver (5).

12. Transporting equipment according to claim 11, characterized in that the grab aligns the at least one workpiece (6) in its position for broaching.

13. Transporting device according to one of claims 1 or 2, characterized in that the lifting slide (12) and the lowering slide (13) are coupled with each other and are drivable up and down in an opposite direction by means of only one reversible drive.

## Revendications

1. Dispositif de transport de pièces dans une machine à brocher verticale, comprenant un dispositif élévateur (10) pour transporter au moins une pièce (6) dans la direction ascendante (24) d'une position d'alimentation basse (22) jusqu'à une position de transfert haute (25), comprenant un dispositif de transfert (26) pour amener la pièce (6), au nombre d'au moins une, dans la direction de transfert (32) en position de brochage (37) et pour l'en retirer, et comprenant un dispositif descendeur (11) pour faire passer la pièce (6), au nombre d'au moins une, dans la direction descendante (39) d'une position de transfert haute (25) jusqu'à une position d'évacuation basse (34), les positions de transfert hautes (25) se trouvant à la même hauteur, et le dispositif de transfert (26) pouvant être déplacé dans la direction de transfert (32) entre les positions de transfert (25) et la position de brochage (37), caractérisé en ce que le dispositif élévateur (10) comporte un chariot élévateur (12) et le dispositif descendeur (11) un chariot descendeur (13) comportant chacun une surface de pose (17) destinée à au moins une pièce, en ce que le dispositif élévateur (10) et le dispositif descendeur (11) sont inclinés l'un vers l'autre, de façon que leurs positions de transfert hautes (25) se trouvent à la même hauteur et sur le même côté de la position de brochage (37).

2. Dispositif de transport selon la revendication 1, caractérisé en ce que les positions de transfert hautes (25) sont identiques.

3. Dispositif de transport selon l'une des revendications 1 ou 2, caractérisé en ce que le chariot élévateur (12) et le chariot descendeur (13) peuvent se déplacer le long de lignes droites (axes 19).

4. Dispositif de transport selon la revendication 3, caractérisé en ce que le chariot élévateur (12) et le chariot descendeur (13) peuvent être entraînés au moyen d'au moins un dispositif d'entraînement linéaire (14).

5. Dispositif de transport selon la revendication 4, caractérisé en ce qu'au moins un dispositif d'entraînement linéaire (14) est formé par un vérin (15) sans tige de piston et sollicité par un agent de pression.

6. Dispositif de transport selon la revendication 5, caractérisé en ce que le chariot élévateur (12) et/ou le chariot descendeur (13) sont guidés coulissants sur le vérin (15) au moyen d'un dispositif de guidage (16).

7. Dispositif de transport selon la revendication 1, caractérisé en ce que des butées de positionnement sont prévues pour la pièce (6), au nombre d'au moins une, sur chacune des surfaces de pose (17).

8. Dispositif de transport selon la revendication 2 et 3, caractérisé en ce que les lignes droites (axes 19) se coupent dans la position de transfert commune (25).

9. Dispositif de transport selon l'une des revendications 1 à 8, caractérisé en ce que le dispositif de transfert (26) comporte un organe d'entraînement (31) qui, au-dessus de la position de transfert (25) au nombre d'au moins une, peut se positionner au-dessus de la surface de pose (17) du chariot élévateur (12) ou du chariot descendeur (13).

10. Dispositif de transport selon la revendication 9, caractérisé en ce que l'organe d'entraînement (31) comporte des butées d'entraînement (33) qui sont disposées par paires transversalement à sa direction de déplacement et qui enserrent une pièce (6).

11. Dispositif de transport selon la revendication 9, caractérisé en ce que l'organe d'entraînement est conçu sous la forme d'un preneur qui soulève la pièce (6), au nombre d'au moins une, la dépose dans le support de pièces (5) et l'en retire.

12. Dispositif de transport selon la revendication 11, caractérisé en ce que le preneur oriente la pièce (6), au nombre d'au moins une, pour les besoins du brochage.

13. Dispositif de transport selon l'une des revendications 1 ou 2, caractérisé en ce que le chariot élévateur (12) et le chariot descendeur (13) sont reliés l'un à l'autre et peuvent être entraînés dans des directions ascendante et, respectivement, descendante opposées au moyen d'un seul dispositif d'entraînement réversible.
